# EUROPEAN PATENT APPLICATION

(11) **EP 4 555 847 A1**
(43) Date of publication of application: **21.05.2025**
(21) Application number: 24213202.5
(22) Date of filing: 15.11.2024
(51) Int. Cl.: A01D 34/64, A01D 34/66, A01D 34/74, B62D 49/06

(54) **WORK VEHICLE**

(30) Priority: 16.11.2023 JP 2023195142
(71) Applicant: Iseki & Co., Ltd., Matsuyama-shi, Ehime 799-2692 (JP)
(72) Inventor: TODA, Hirotaka, Ehime-ken, 791-2193 (JP); BABA, Yusuke, Ehime-ken, 791-2193 (JP)
(74) Representative: TBK

(57) **Abstract**

[Problem] To provide a work vehicle capable of elevating/lowering a working machine mounted on the rear side of a vehicle body without detaching a mower deck.

[Solution] A work vehicle includes: a traveling vehicle body (1); a first working machine (2) mounted on the traveling vehicle body (1); and a working machine connector (3) for attaching a second working machine, wherein one end (3b) of the working machine connector (3) is rotatably attached to the traveling vehicle body (1), and the other end (3c) of the working machine connector (3) to which the second working machine is attached is elevated/lowered with a rotation of the working machine connector (3) by a lifting apparatus, a connecting link (4) for connecting the working machine connector (3) and the first working machine (2) is provided, and a working machine fixture (5) is provided to fix the first working machine (2) at a predetermined height position, even if the second working machine is elevated/lowered with the rotation of the working machine connector (3) once the first working machine (2) is elevated/lowered to the predetermined height position by activating the connection link (4) with the rotation of the working machine connector (3).

## Description

### TECHNICAL FIELD

The present disclosure relates to a work vehicle such as a tractor equipped with a mower.

### BACKGROUND ART

In the field of a work vehicle in which a mower deck is disposed between front wheels and rear wheels of the work vehicle and a working machine different from the mower deck can be mounted on the rear side of the work vehicle, it is conventionally known that a connecting tool of a working machine mounted on the rear side of the work vehicle and a connecting tool of a mower deck are connected by a link so that the mower deck and the working machine mounted on the rear side of the work vehicle can be elevated/lowered simultaneously (Patent Document 1).

### PRIOR ART DOCUMENT

### PATENT DOCUMENT

Patent Document 1: Japanese Patent Laid-open Publication No. 2008-173052

### SUMMARY OF INVENTION

### TECHNICAL PROBLEM

However, since such a working vehicle elevates/lowers the mower deck and the working machine mounted on the rear side of the work vehicle simultaneously, it has been required to detach the mower deck with labor if desiring to elevate/lower only the rear working machine during not using the mower deck.

The present disclosure has been made in view of such circumstances of the conventional working machine, and an object of the present disclosure is to provide a work vehicle capable of elevating/lowering freely a working machine mounted on the rear side of a vehicle body with no labor without detaching a mower deck during not using the mower deck.

### SOLUTION TO PROBLEM

According to a first aspect of the present disclosure, a work vehicle is provided, which includes a traveling vehicle body (1), a first working machine (2) mounted on the traveling vehicle body (1), and a working machine connector (3) for attaching a second working machine, wherein one end (3b) of the working machine connector (3) is rotatably attached to the traveling vehicle body (1), and the other end (3c) of the working machine connector (3) to which the second working machine is attached is elevated/lowered with a rotation of the working machine connector (3) by a lifting apparatus, a connecting link (4) for connecting the working machine connector (3) and the first working machine (2) is provided, and a working machine fixture (5) to fix the first working machine (2) at a predetermined height position is provided, even if the second working machine is elevated/lowered with the rotation of the working machine connector (3) once the first working machine (2) is elevated/lowered to the predetermined height position by activating the connection link (4) with the rotation of the working machine connector (3).

### ADVANTAGEOUS EFFECTS OF INVENTION

According to the present disclosure, during not using a first working machine (2), it is possible to freely elevate/lower a second working machine mounted on the rear side of the vehicle body with no labor without detaching the first working machine (2).

### BRIEF DESCRIPTION OF DRAWINGS

FIG. 1 is a partial perspective view of a work vehicle mainly illustrating a mower and a lower link of a tractor according to an embodiment of the present disclosure,
FIG. 2 is a partial perspective view of the tractor,
FIG. 3 is a partial perspective bottom view of the tractor,
FIG. 4 is a perspective view illustrating the lower link and a connecting link of the tractor,
FIG. 5 is a partial perspective view of a rear side of the tractor with the mower being at the highest position,
FIG. 6 is a partial bottom view of the tractor,
FIG. 7 is a perspective view of a first link of a connecting link of the tractor,
FIG. 8 is a partial perspective view illustrating a lock of the mower of the tractor,
FIG. 9 is a partial perspective view illustrating a lock of the mower of the tractor,
FIG. 10 is a partial perspective view of the connecting link of the tractor as viewed from another angle,
FIG. 11 is a partial perspective view illustrating the lock of the mower of the tractor,
FIG. 12 is a partial perspective view of a locking mechanism of the tractor,
FIG. 13 is a partial perspective view illustrating a lock release holding mechanism of the tractor,
FIG. 14 is a partial perspective view illustrating a check chain bracket of the tractor,
FIG. 15 is a partial perspective view illustrating an adjustment of the highest position of the mower of the tractor, and
FIG. 16 is a plan view illustrating a mounting position of the mower on the tractor.

### DESCRIPTION OF EMBODIMENTS

Now, an embodiment of the present disclosure is described in detail with reference to the drawings.

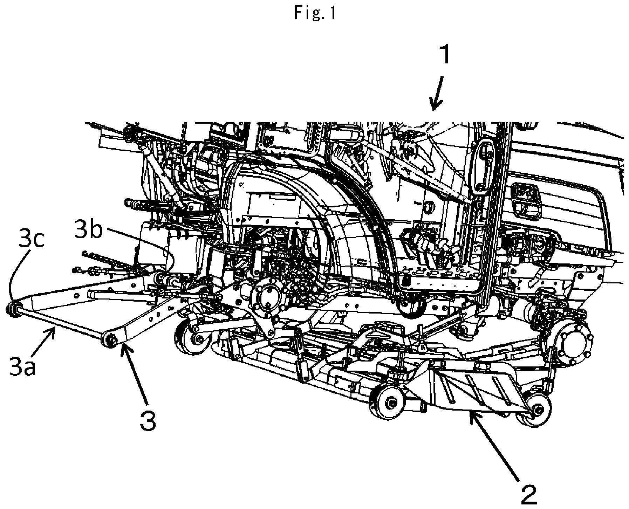

FIG. 1 is a partial perspective view of a tractor mainly illustrating a mower and a lower link of the tractor as an example of a work vehicle according to an embodiment of the present disclosure.

Hereinafter, the terms "front", "rear", "left", "right", "upper", and "lower" are defined on the basis of a traveling direction of the tractor.

A mower as an example of a lower working machine 2 which is a first working machine is mounted on a lower side of the traveling vehicle body 1. In addition, a working machine connector 3 for attaching a rear working machine, a cultivator for example, which is a second working machine different from the lower working machine 2, is mounted on the rear side of the traveling vehicle body 1.

The working machine connector 3 has a three-point-link structure including two lower links 3a and the like, for example.

One end 3b of the working machine connector 3 is pivotably attached to a main body frame 1a of the traveling vehicle body 1, and it allows the other end 3c of the working machine connector 3 to be elevated/lowered when a lifting apparatus (not shown) rotates the working machine connector 3.

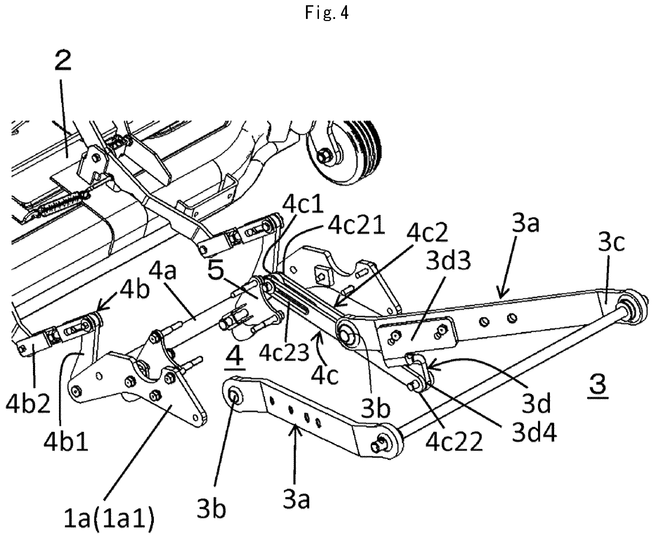

Furthermore, one of the lower links 3a is equipped with a connecting link 4 (see FIG. 4) for connecting the working machine connector 3 and the lower working machine 2. Note that the other of the lower links 3a is not equipped with the connecting link 4. This is because a large force is not necessary to elevate/lower the mower 2.

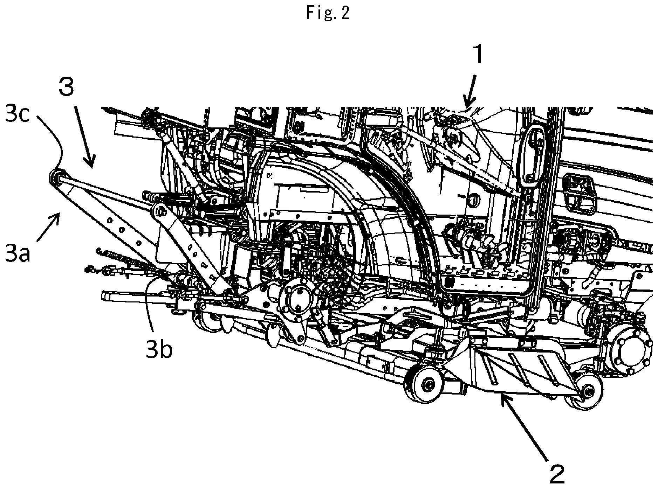

FIG. 1 shows a state where the working machine connector 3 is lowered, and FIG. 2 shows a state where the working machine connector 3 is elevated by the lifting device. FIGS. 1 and 2 shows that the lower working machine 2 is also elevated/lowered in accordance with the elevating/lowering operation of the working machine connector 3.

As described later, in a cooperative mode, the lower working machine 2 is also elevated/lowered cooperatively with the elevating/lowering operation of the other end 3c of the working machine connector 3. In the highest elevation mode, that is, in a mode where the lower working machine 2 is kept elevated, the lower working machine 2 is fixed at a predetermined height position by a lower working machine fixture 5 not lowered cooperatively with the lowering operation of the other end 3c of the working machine connector 3.

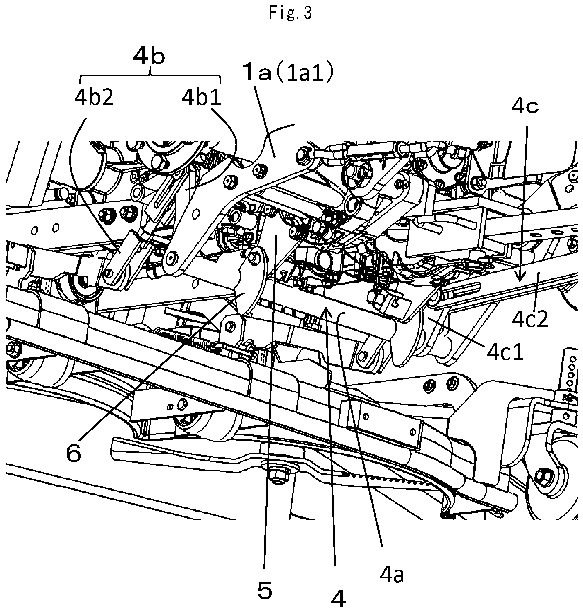

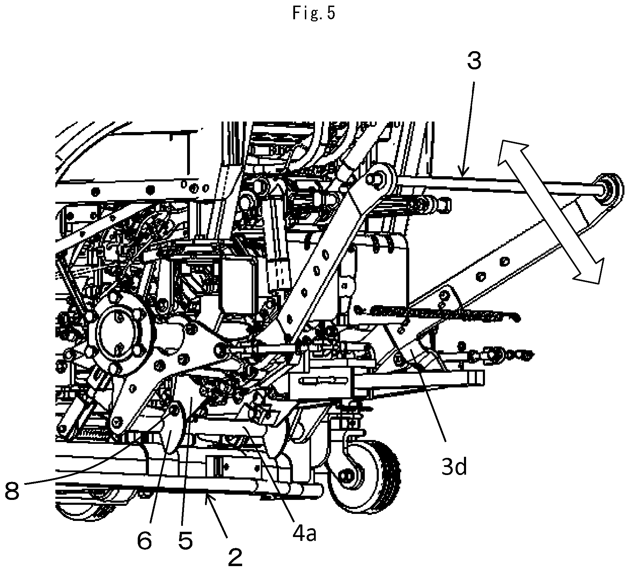

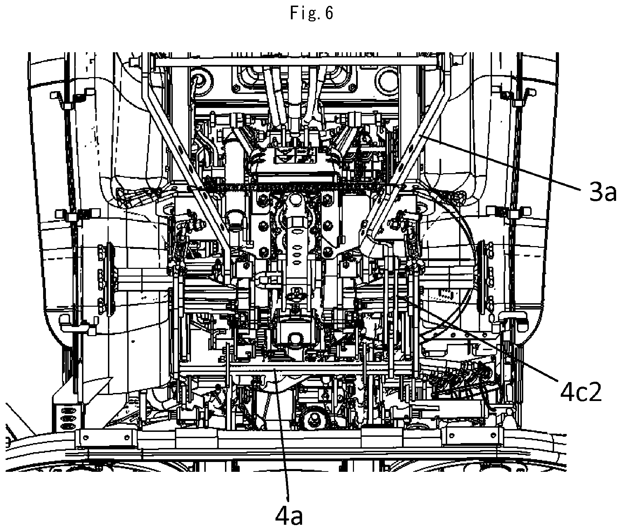

The connecting link 4 exerting such an action has a mechanism as described below. That is, as shown in FIGS. 3 to 6, the connecting link 4 includes a rear link shaft 4a rotatably supported by the main body frame 1a of the traveling vehicle body 1, a first link 4b for elevating/lowering the lower working machine 2 with the rotation of the rear link shaft 4a, and a second link 4c for connecting the rear link shaft 4a and the working machine connector 3.

The second link 4c has a mechanism for causing the rear link shaft 4a to rotate and elevate the lower working machine 2 when the other end 3c of the working machine connector 3 performs an elevating operation, and for causing the rear link shaft 4a to rotate freely when the other end 3c performs a lowering operation. That is, when the lower working machine 2 is lowered, the rear link shaft 4a receives no force so as to be freely rotatable. Therefore, as long as no intervention such as locking is made by other members, the lower working machine 2 is lowered by its own weight via the first link 4b.

In this way, in the cooperative mode where no locking is applied from other members, the lower working machine 2 is forced to be elevated during the elevating operation of the working machine connector 3, and the lower working machine 2 is lowered by its own weight during the lowering operation of the working machine connector 3. That is, in the cooperative mode, the lower working machine 2 is also elevated/lowered corresponding to the elevating/lowering operation of the working machine connector 3.

More specifically, the second link 4c is composed of a connecting bracket 4c1 raised upwardly from the rear link shaft 4a and an arm 4c2. The connecting bracket 4c1 is raised upwardly from the rear link shaft 4a, and a connecting hole 4c11 and a pin inserted into the connecting hole 4c11 are provided at the upper end of the connecting bracket 4c1.

One end 4c21 of the arm 4c2 is slidably connected via an oblong hole 4c23 to the pin inserted into the connecting hole 4c11 of the connecting bracket 4c1. On the other hand, the other end 4c22 is pivotably connected to a bending plate 3d fixed to the lower link 3a of the working machine connector 3. Note that the bending plate 3d is vertically downwardly extended from the lower link 3a and fixed thereto. Reference numeral 3d3 denotes an upper end of the bending plate 3d fixed to the lower link 3a, and reference numeral 3d4 denotes a lower end of the bending plate 3d, which is pivotably connected to the other end 4c22 of the arm 4c2 (see FIG. 4).

As mentioned above, since the bending plate 3d is vertically downwardly extended from the lower link 3a and fixed thereto, when the lower link 3a is elevated while rotating from a horizontal state, even if the upper end 3d3 moves forward rotating, the lower end 3d4 once moves rearward to draw the other end 4c22 of the arm 4c2 rearward.

Therefore, the arm 4c2 moves rearward in accordance with the elevating operation of the other end 3c of the working machine connector 3, draws the connecting bracket 4c1, and rotates the rear link shaft 4a so that the lower working machine (mower) 2 is elevated.

The vertical cross section of the bending plate 3d is bent so that the arm 4c2 does not interfere with the one end 3b of the lower link 3a when the arm 4c2 is elevated upward (see FIG. 4).

Here, in the cooperative mode, as mentioned above, upon the working machine connector 3 is elevated, the arm 4c2 is drawn via the bending plate 3d, the connecting bracket 4c1 is forced to be rotated at the front side end of the oblong hole 4c23, so that the rear link shaft 4a is rotated. Accompanying with the rotation of the rear link shaft 4a, the brackets 4b 1 (fixed to the rear link shaft 4a) of the first link 4b are rotated, and accordingly a connecting tool 4b2 of the first link 4b is drawn and elevated, so that the lower working machine 2 connected to the connecting tool 4b2 is forced to be elevated.

On the other hand, in the cooperative mode, when the working machine connector 3 is lowered, the arm 4c2 moves forward via the bending plate 3d. Then, the oblong hole 4c23 also moves forward, so that the drawing force disappears. As a result, the connecting bracket 4c1 becomes freely rotatable, and the rear link shaft 4a also becomes freely rotatable.

On the other hand, since the lower working machine 2 has a reasonable weight, the lower working machine 2 starts to lower. Also the rear link shaft 4a freely rotates via the first link 4b, and the brackets 4b1 of the first link 4b rotate.

In short, in the cooperative mode, the lower working machine 2 is also elevated/lowered in accordance with the elevating/lowering operation of the working machine connector 3.

On the other hand, in the highest elevation mode, by an action of the lower working machine fixture 5 as described below, the lower working machine 2 is suspended at the position where the lower working machine 2 is elevated, but the working machine connector 3 can be freely lowered.

That is, when another member locks the rotation operation, the following action is performed. The lower working machine fixture 5 is fixed to the main body frame 1a, and locks the rotation operation of the rear link shaft 4a when the rear link shaft 4a rotates to elevate the lower working machine 2. The mechanism of the lock is as follows.

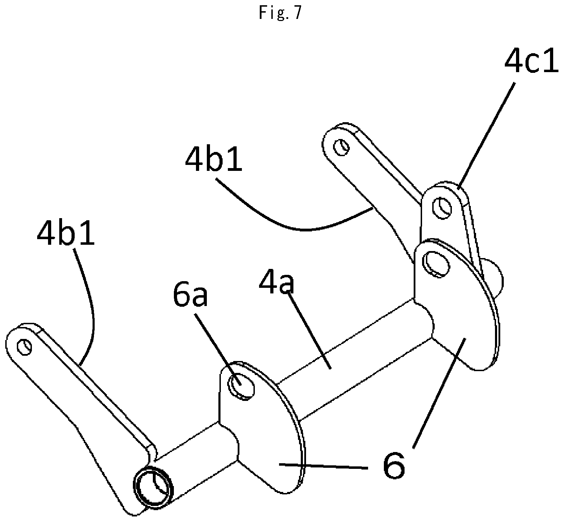

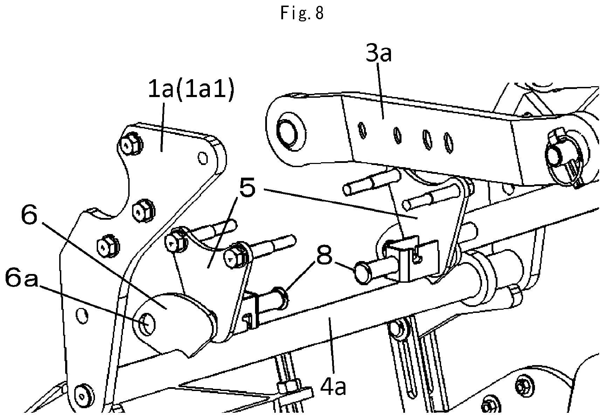

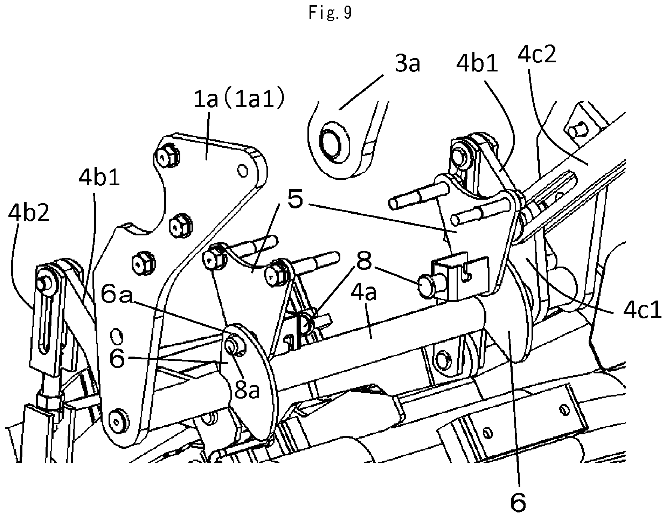

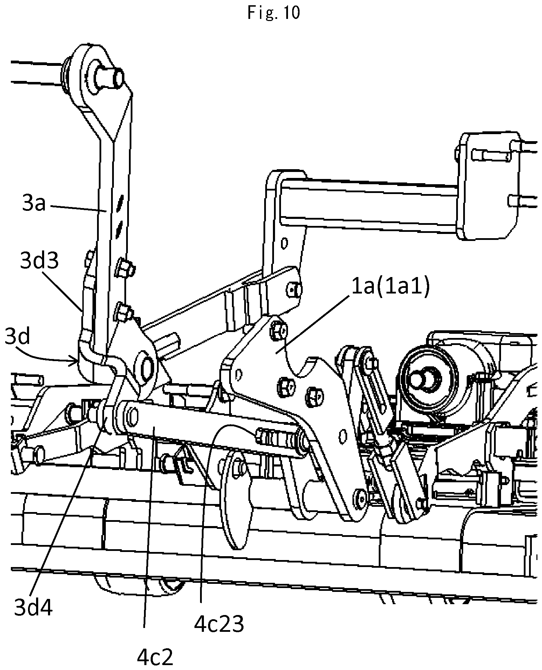

As shown in FIGS. 7 to 11, a locking bracket 6, in which a hole 6a is opened at a predetermined position, is erected on the rear link shaft 4a.

On the other hand, the lower working machine fixture 5 has a plate-like shape and is fixed to the main body frame 1a, but is opposed to the locking bracket 6 with being slightly apart from each other.

Locking pins 8 are attached to the lower working machine fixture 5 so that the locking pins 8 are energized by a spring 7 to be pushed out toward the locking bracket 6.

Here, the rotation of the rear link shaft 4a elevates the lower working machine 2 and rotates the locking bracket 6. Upon a tip 8a of the locking pin 8 is aligned with the hole 6a, the tip 8a is inserted into the hole 6a with the force which is always energized by a spring 7. Thereby, the locking bracket 6 is prevented from rotating, so that the rear link shaft 4a is locked to be unable to rotate any more, and the lower working machine 2 is also locked at that height position.

Note that the height position where the lower working machine 2 should be suspended can be selected by adjusting the mounting position of the locking bracket 6 on the rear link shaft 4a, an opening position of the hole 6a, the arrangement of the lower working machine fixtures 5, the attaching position of the locking pin 8, and the like.

Note that in a state where the locking pin 8 is not inserted into the hole 6a, although the locking pin 8 is energized with the force by the spring 7, the tip 8a of the locking pin 8 abuts and slides on the surface of the locking bracket 6 since the tip 8a of the locking pin 8 is misaligned with the hole 6a. Upon the tip 8 comes to the position aligned with the hole 6a, the tip 8 is inserted into the hole 6a. Disposing the tip 8a of the locking pin 8 at the position misaligned with the hole 6a is referred to as a preparatory operation.

Note that even in the state where the rear link shaft 4a is prevented from rotating so that the lower working machine 2 is locked at the highest position, the arm 4c2 can move forward when the working machine connector 3 is lowered, as mentioned above. However, the lower working machine 2 can be freely lowered due to the presence of the oblong hole 4c23 opened at the arm 4c2 without interfering with the connecting bracket 4c1 which is unrotatably locked.

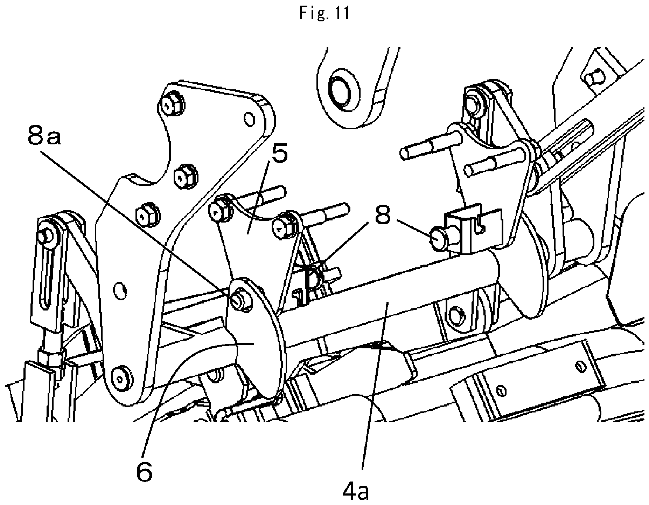

Next, in the cooperative mode, it is necessary to prohibit an automatic locking function of the locking pin 8. For this purpose, as shown in FIGS. 11, 12, and 13, a lock release holding mechanism 9 is provided.

That is, the lock release holding mechanism 9 includes a base 10 and a penetration pin 11. The base 10 is constituted by a member which has a U-shaped cross section and is fixed to a side of the lower working machine fixture 5 opposite to a side thereof from which the locking pin 8 is pushed out. The side surfaces 10a and 10b of the member having the U-shaped cross section have L-shaped notches 10c and 10d, respectively. That is, the L-shaped notch 10c is notched from the lower side of one side surface 10a, and the L-shaped notch 10d is notched from the upper side of the other side surface 10b.

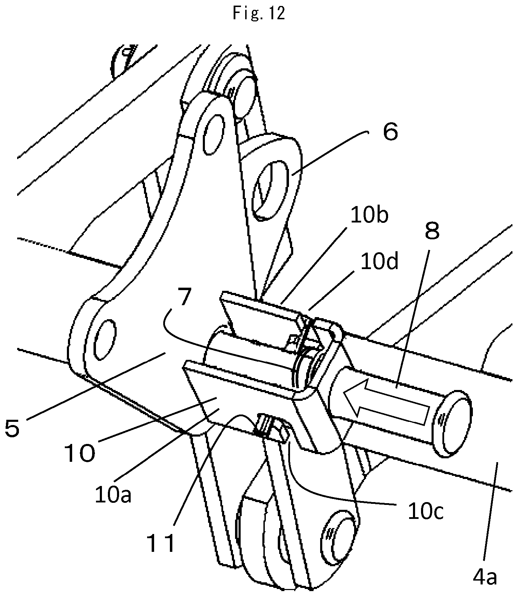

On the other hand, a penetration pin 11 penetrates the locking pin 8 in the traverse direction. The penetration pin 11 has such a length that both ends of the penetration pin 11 protrude out of the side surfaces 10a and 10b of the member with U-shaped cross section. Here, in FIGS. 11 and 12, since the penetration pin 11 is disposed within the notches 10c and 10d, the locking pin 8 cannot be pushed out toward the locking bracket 6. In other words, this is a state where the lock is released.

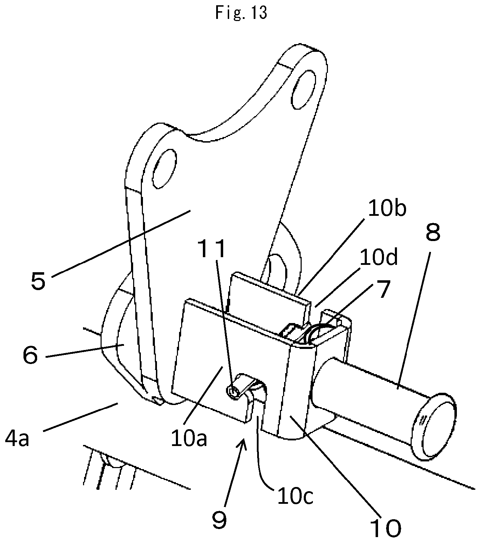

Note that since the spring 7 is disposed between the inner side of a closing surface of the base 10 with U-shaped cross section and the penetration pin 11, the spring 7 always energizes the penetration pin 11 with the force toward the locking bracket 6. However, since the penetration pin 11 is disposed within the L-shaped notches 10c and 10d, the locking pin 8 cannot be pushed out any further. Note that as shown in FIG. 13, since the penetration pin 11 is disposed at terminals of the L-shaped notches 10c and 10d and the spring 7 energizes the penetration pin 11 with the force to the terminal side, there is no concern that the penetration pin 11 comes off due to any impact or vibration.

Here, when activating the locking function of the locking pin 8, referring to FIG. 13 by slightly drawing the locking pin 8 inward and then rotating the locking pin 8 counterclockwise, the penetration pin 11 can be released from the L-shaped notches 10c and 10d (see FIG. 13). As a result, the penetration pin 11 can move toward the locking bracket 6, thereby the lock function can be activated.

Note that since the lower working machine fixture 5 is constituted as a member separate from the rear link shaft 4a, it is easy to remove the lower working machine fixture 5 if unnecessary.

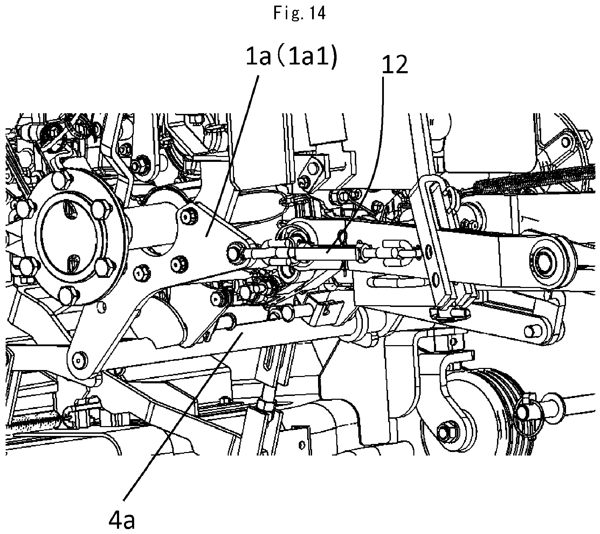

As shown in FIG. 14, a fulcrum of a check chain bracket 12 may be provided on a rear link bracket 1a1 of the main body frame 1a. This allows a check chain to be fixed even when a mower link is attached.

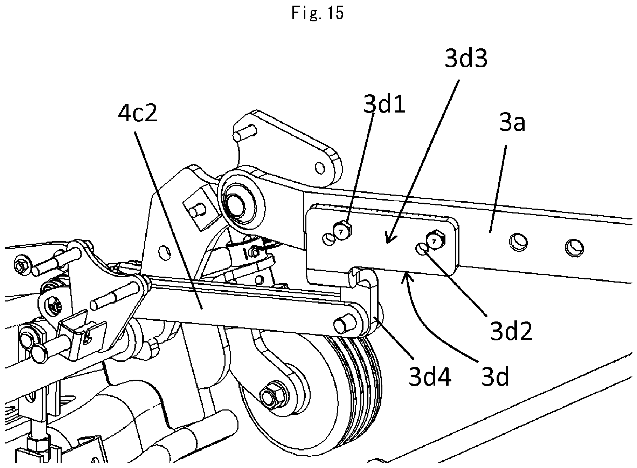

FIG. 15 shows an example in which the attaching position of the bending plate 3d to the working machine connector 3 is adjustable. Here, reference numerals 3d1 and 3d2 denote a bolt and a hole, respectively. This allows the highest position of the lower working machine 2 to be easily changed.

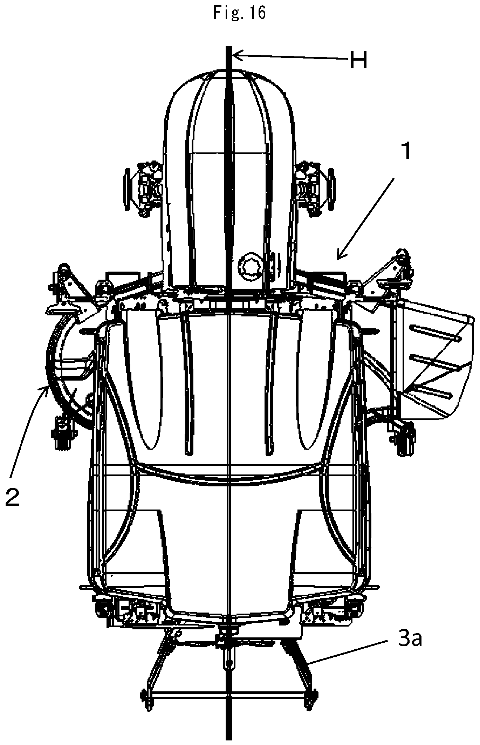

FIG. 16 shows the work vehicle in which the center of the lower working machine 2 is offset to the left side from the center H of the traveling vehicle body 1. This allows a work near the wall to be facilitated since the offset of the lower working machine 2 from the traveling vehicle body 1 increases.

Note that the lower working machine of the present disclosure is not limited to the mower, and any working machine which needs to be elevated/lowered with being mounted on the vehicle body can be applied.

Furthermore, the working machine connector 3 of the present disclosure is not limited to the three-point-link structure.

### INDUSTRIAL APPLICABILITY

The present disclosure can provide a work vehicle capable of freely elevating/lowering a working machine attached on the rear side of the vehicle body with no labor without detaching a mower during not using the mower, and therefore is most applicable to such as a tractor equipped with the mower.

## Claims

1. A work vehicle comprising:
a traveling vehicle body (1);
a first working machine (2) mounted on the traveling vehicle body (1); and
a working machine connector (3) for attaching a second working machine,
wherein one end (3b) of the working machine connector (3) is rotatably attached to the traveling vehicle body (1), and the other end (3c) of the working machine connector (3) to which the second working machine is attached is elevated/lowered with a rotation of the working machine connector (3) by a lifting apparatus,
a connecting link (4) for connecting the working machine connector (3) and the first working machine (2) is provided, and
a working machine fixture (5) is provided to fix the first working machine (2) at a predetermined height position, even if the second working machine is elevated/lowered with the rotation of the working machine connector (3) once the first working machine (2) is elevated/lowered to the predetermined height position by activating the connection link (4) with the rotation of the working machine connector (3).

2. The work vehicle according to claim 1, wherein
the connecting link (4) includes a rear link shaft (4a) rotatably supported by a main body frame (1a) of the traveling vehicle body (1),
a locking bracket (6) that rotates together with the rear link shaft (4a) is erected on the rear link shaft (4a),
the working machine fixture (5) is fixed to the main body frame (1a), and
when the first working machine (2) is elevated/lowered with the rotation of the rear link shaft (4a) and the locking bracket (6) is rotated to a predetermined position with respect to the working machine fixture (5), the locking bracket (6) and the working machine fixture (5) are engaged with each other to lock an elevating/lowering operation of the first working machine (2).

3. The work vehicle according to claim 2, wherein
the connecting link (4) includes a first link (4b) to elevate/lower the first working machine (2) with the rotation of the rear link shaft (4a), and a second link (4c) to rotate the rear link shaft (4a) with the rotation of the working machine connector (3),
the second link (4c) includes an arm (4c2) whose one end (4c21) is connected to a connecting bracket (4c1) erected on the rear link shaft (4a) and whose the other end (4c22) is connected to the working machine connector (3), and
the arm (4c2) is connected by an oblong hole (4c23), and slides by means of the oblong hole (4c23) when the working machine connector (3) is elevated/lowered with the elevating/lowering operation of the first working machine (2) being locked.

4. The work vehicle according to claim 2, wherein
a hole (6a) is opened at a predetermined position of the locking bracket (6),
the working machine fixture (5) has a locking pin (8) that is energized so as to be pushed out toward the locking bracket (6),
upon a position of the hole (6a) and a position of the locking pin (8) are aligned with each other with the rotation of the locking bracket (6), the locking pin (8) is inserted into the hole (6a), so that the locking bracket (6) and the working machine fixture (5) are engaged with each other, and
the working machine fixture (5) includes a lock release holding mechanism (9) to hold the locking pin (8) at a lock release position so that the locking pin (8) is not inserted into the hole (6a).

5. The work vehicle according to claim 4, wherein
the lock release holding mechanism (9) includes a base (10) and a penetration pin (11) that is provided so as to penetrate the locking pin (8) in a traverse direction,
the base (10) is fixed to the working machine fixture (5),
notches (10c, 10d) are formed on both side surfaces (10a, 10b) of the base (10), and
the locking pin (8) is unable to be inserted into the hole (6a) of the locking bracket (6) when both ends of the penetration pin (11) are disposed within the notches (10c, 10d).
